# EUROPEAN PATENT APPLICATION

(11) **EP 4 400 882 A1**
(43) Date of publication of application: **17.07.2024**
(21) Application number: 22867029.5
(22) Date of filing: 24.06.2022
(51) Int. Cl.: G02B 6/125, G02B 6/42

(54) **OPTICAL WAVEGUIDE ELEMENT AND LIGHT SOURCE MODULE**

(30) Priority: 07.09.2021 JP 2021145530
(71) Applicant: Seiren Kst Corp., Fukui-shi, Fukui 918-8135 (JP); University of Fukui, Fukui-shi, Fukui 910-8507 (JP)
(72) Inventor: IWABATA, Kazuki, Fukui-shi, Fukui 918-8135 (JP); HIMENO, Akira, Fukui-shi, Fukui 918-8135 (JP); HORII, Koichi, Fukui-shi, Fukui 918-8135 (JP); KAWASAKI, Osamu, Fukui-shi, Fukui 918-8135 (JP); YABE, Yuuta, Fukui-shi, Fukui 918-8135 (JP); KAMEI, Yojiro, Fukui-shi, Fukui 918-8135 (JP); KATSUYAMA, Toshio, Fukui-shi, Fukui 910-8507 (JP); YAMADA, Shoji, Fukui-shi, Fukui 910-8507 (JP); NAKAO, Akira, Fukui-shi, Fukui 910-8507 (JP)
(74) Representative: Müller-Boré & Partner Patentanwälte PartG mbB
(86) International application number: PCT/JP2022/025266
(87) International publication number: WO 2023/037702

(57) **Abstract**

The present invention provides an optical waveguide device that ensures a large area of light available for image display, enables easy correction of deviations of light spots and accompanying cost reduction, and can display images with reduced speckle noise. The present invention further provides a light source module including a light source and the optical waveguide device. The optical waveguide device (1) allows a plurality of light beams of different wavelengths to be input to and propagate through corresponding waveguides (4b, 4g, 4r) and then be output. Input ports (3b, 3g, 3r) of the waveguides are spaced apart from each other so as not to receive light beams of improper wavelengths; at least one of the waveguides is curved; and output ports (5b, 5g, 5r) of the waveguides are located close to each other. Thus, the optical waveguide device enables cost reduction and can display images with reduced speckle noise.

## Description

### Technical Field:

The present invention relates to an optical waveguide device that includes waveguides for respectively receiving a plurality of light beams of different wavelengths, allowing the respective light beams to be input to and propagate through the corresponding waveguides and then be output. In the optical waveguide device, the input ports of the waveguides are spaced apart from each other so as not to receive light beams of improper wavelengths; at least one of the waveguides is curved; and the output ports of the waveguides are located close to each other. The present invention further relates to a light source module using the optical waveguide device.

### Background Art:

In recent years, it has been known to use an optical waveguide device in a light source circuit for small image projectors such as an eye-wear and a portable projector. The optical waveguide device multiplexes light from a plurality of laser diodes as light sources through waveguides and outputs the multiplexed light (see Patent Documents 1 and 2.) Such an optical waveguide device is fabricated through the following steps: forming a low refractive index cladding silicon oxide layer on a silicon substrate; and depositing a high refractive index silicon oxide core layer by a known method such as chemical vapor deposition (CVD) or sputtering; patterning the high refractive index silicon oxide core layer into waveguides by photolithography using a photomask; and over-cladding another low refractive index silicon oxide layer.

However, the above-described optical waveguide device has difficulty in providing high-quality output light for the following reasons. For example, since the device is designed to merely multiplex a plurality of light beams and output the multiplexed light, the respective light beams have different intensity distributions in the output light projection range, and it is not easy to calibrate the intensities of the respective light beams.

Meanwhile, there has been a known optical waveguide device that enables efficient image projection (see Patent Document 3). More specifically, this optical waveguide device uses an electromagnetically driven mirror known as a MEMS (Micro Electro Mechanical Systems) mirror, so that components of a light source, such as "red", "green" and "blue" components, are output in a time-shifted manner, thereby controlling light intensities.

However, in the above-described optical waveguide device, since the respective light beams are emitted at wide intervals, only a small area of synthesized light obtained after MEMS reflection can be used for image display. Further, there is a need to significantly correct deviations of light spots, which necessitates complicated control, resulting in limited cost reduction potential. Furthermore, since the emitted beams remain single-mode, speckle noise occurs in an image displayed on a screen, resulting in image quality degradation.

### Prior Art Documents:

### Patent Documents:

Patent Document 1: JP-A-2005-189385
Patent Document 2: WO 2019/082347
Patent Document 3: US-B2-9686519

### Summary of the Invention:

### Problems to be solved by the Invention:

The present invention has been made in view of the aforementioned circumstances and provides an optical waveguide device that ensures a large area of high-quality output light available for image display and the like, enables easy correction of deviations of light spots and accompanying cost reduction, and can display images with reduced speckle noise. The present invention further provides a light source module including a light source and the optical waveguide device.

### Means for solving the Problems:

The present invention provides an optical waveguide device including waveguides that respectively receive a plurality of light beams of different wavelengths. The optical waveguide device allows the respective light beams to be input to and propagate through the corresponding waveguides and then be output. Input ports of the waveguides are spaced apart from each other so as not to receive light beams of improper wavelengths; at least one of the waveguides is curved; and output ports of the waveguides are located close to each other.

It is preferable that the plurality of light beams propagate through the respective waveguides in a multi-mode fashion.

It is preferable that the waveguides are 5 to 50 µm in width and height.

It is preferable that the input ports of the waveguides are provided at a distance of at least 20 µm or more from each other.

It is preferable that the output ports of the waveguides are provided at a distance of 5 to 10 µm from each other.

It is preferable that the input ports of the waveguides are not present on the same axes in a light propagation direction as the output ports.

It is preferable that the plurality of light beams of different wavelengths include at least a red light beam, a green light beam and a blue light beam.

The present invention provides a light source module including the optical waveguide device, and a plurality of light sources arranged on a light input end face side of the optical waveguide device. Light beams emitted respectively from the plurality of light sources are guided from the light input end face side and output from a light output end face side of the optical waveguide device.

It is preferable that each of the light sources is a laser diode.

It is preferable that the plurality of light sources emit at least a blue light beam, a green light beam and a red light beam.

### Effect of the Invention:

The present invention can provide a small optical waveguide device available for image projection devices, such as an eye-wear and a portable projector, as well as for lighting purposes, such as in-vehicle interior or exterior lighting and a backlight for liquid crystal displays. The small optical waveguide device of the present invention has other uses than the above; however, it is preferably used in the image projection devices or for lighting purposes, and more preferably used in the image projection devices.

### Brief Description of the Drawings:

[Fig. 1] : a top view of a light source module including an optical waveguide device of Example 1 of the present invention;
[Fig. 2]: an end cross sectional view of input ports of the optical waveguide device of Example 1 of the present invention;
[Fig. 3]: an end cross sectional view of output ports of the optical waveguide device of Example 1 of the present invention;
[Fig. 4] : diagrams showing a comparison of speckle noise between a single-mode light output and a multi-mode light output;
[Fig. 5] : diagrams showing a comparison of resolution between a single-mode light output and a multi-mode light output;
[Fig. 6] : top views of a light source module including an optical waveguide device of Example 2 of the present invention;
[Fig. 7] : top views of a light source module including an optical waveguide device of Example 3 of the present invention; and
[Fig. 8] : a top view of a light source module including an optical waveguide device of Example 4 of the present invention.

### Mode for Carrying out the Invention:

Hereinafter, Examples for carrying out the present invention will be described with reference to the drawings . The present invention is not limited to these examples.

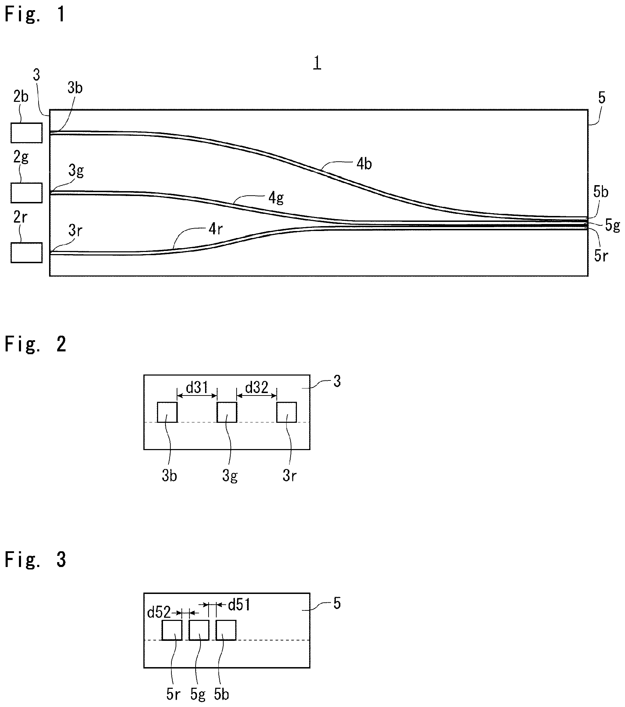

Fig. 1 is a top view of a light source module including an optical waveguide device 1 of Example 1. On the left side of the optical waveguide device 1, laser diodes 2b, 2g and 2r, as light sources, are placed to emit a blue light beam, a green light beam and a red light beam, respectively, which are then input to the optical waveguide device 1 from a blue light input port 3b, a green light input port 3g and a red light input port 3r, respectively, provided on an input port end face 3 of the optical waveguide device 1. Then, the respective light beams propagate through a blue light optical waveguide 4b, a green light optical waveguide 4g and a red light optical waveguide 4r, each having a curved shape, and are output from a blue light output port 5b, a green light output port 5g and a red light output port 5r provided on an output port end face 5 of the optical waveguide device 1. The respective optical waveguides may be the same or different in width and height, but are preferably the same so that the light can propagate horizontally and vertically under the same conditions.

The blue light beam, the green light beam, and the red light beam have frequencies of 430 to 495 nm, 495 to 570 nm, and 620 to 750 nm, respectively. A plurality of light beams of different wavelengths for use in the optical waveguide device of the present invention preferably include at least the blue light beam, the green light beam and the red light beam, and may also include light beams of other wavelengths, such as, but not limited to, a yellow light beam, an orange light beam, a deep blue light beam, and a purple light beam. The positional relationship and the like of the blue light beam, the green light beam and the red light beam is not limited to that shown in Fig. 1.

Each of the blue light optical waveguide 4b, the green light optical waveguide 4g and the red light optical waveguide 4r has a curved shape. Due to the curved optical waveguides, the blue light input port 3b, the green light input port 3g and the red light input port 3r preferably are not present on the same axes in the light propagation direction as the blue light output port 5b, the green light output port 5g and the red light output port 5r, respectively. When the output ports are not present on the same axes in the light propagation direction as the input ports but placed out of alignment with the input ports, it becomes possible to reduce the influence of, for example, stray light leaking linearly in the light propagation direction from the curved parts of the waveguides.

In order to reduce the loss of light propagating through the waveguides, each of the curved parts preferably has a curvature radius r of 3000 µm or more. If the curvature radius r is less than 3000 pm, it may be difficult to suppress the amount of stray light leaking linearly in the light propagation direction from the curved parts of the waveguides.

The blue light optical waveguide 4b, the green light optical waveguide 4g and the red light optical waveguide 4r allow for both single-mode and multi-mode light propagation, but are preferably used for multi-mode light propagation, for the reason described later.

The blue light optical waveguide 4b, the green light optical waveguide 4g and the red light optical waveguide 4r are preferably 5 to 50 µm in width and height. If the width and height are less than 5 pm, there may be a decrease in the efficiency of coupling light emitted from the laser diodes into the waveguides. If the width and height are more than 50 pm, the resultant image may have poor optical properties.

The laser diodes 2b, 2g and 2r are preferably mounted at a gap distance of 10 µm or more from the input port end face 3. If the gap distance is less than 10 pm, the power density of the laser diodes on the end face 3 is increased, so that the input port end face 3 and the optical waveguide device may be damaged. The upper limit of the gap distance is not particularly limited. The distance is set as appropriate in light of the fact that a larger gap distance leads to a decrease in the efficiency of coupling with the optical waveguide device of the present invention. The distance may be the same or different for the respective light sources.

Fig. 2 shows the input port end face 3 of the optical waveguide device 1 of Example 1. The blue light input port 3b, the green light input port 3g and the red light input port 3r are spaced apart from each other so as not to receive light beams of improper wavelengths. Distances d31 and d32 between the input ports are preferably at least 20 µm or more, more preferably 100 µm or more. When the distances are 20 µm or more, the light sources can also be spaced apart from each other, which allows for easy heat dissipation, thereby ensuring the reliability of the light sources. If the distances are less than 20 pm, there is a possibility that the input ports may receive adjacent light beams of improper wavelengths, and that the reliability of the light sources cannot be ensured. The upper limit of the distances is not particularly limited. The distances are set as appropriate in light of the fact that larger distances will make the optical waveguide device of the present invention larger. The distances d31 and d32 may be the same or different.

In Fig. 1, the laser diodes 2b, 2g and 2r emit light in a direction perpendicular to the input port end face 3. However, the laser diodes may emit light in a direction oblique to the input port end face 3 by changing the angle of the emission direction. When the angle of the emission direction is changed, stray light can sometimes be reduced. Further, according to the angle of the emission direction, the blue light optical waveguide 4b, the green light optical waveguide 4g and the red light optical waveguide 4r, which are connected to the blue light input port 3b, the green light input port 3g and the red light input port 3r, respectively, may be formed in a direction oblique to the input port end face 3.

Fig. 3 shows the output port end face 5 of the optical waveguide device 1 of Example 1. The blue light output port 5b, the green light output port 5g and the red light output port 5r are located close to each other so that the plurality of light beams can form an image for display. Distances d51 and d52 between the output ports are preferably 5 to 10 µm. If the distances are less than 5 µm, light coupling may occur between the adjacent waveguides, possibly causing light in one of the waveguides to travel to another. If the distances are more than 10 pm, the area of the output light available for image display and the like may be reduced. The distances d51 and d52 may be the same or different.

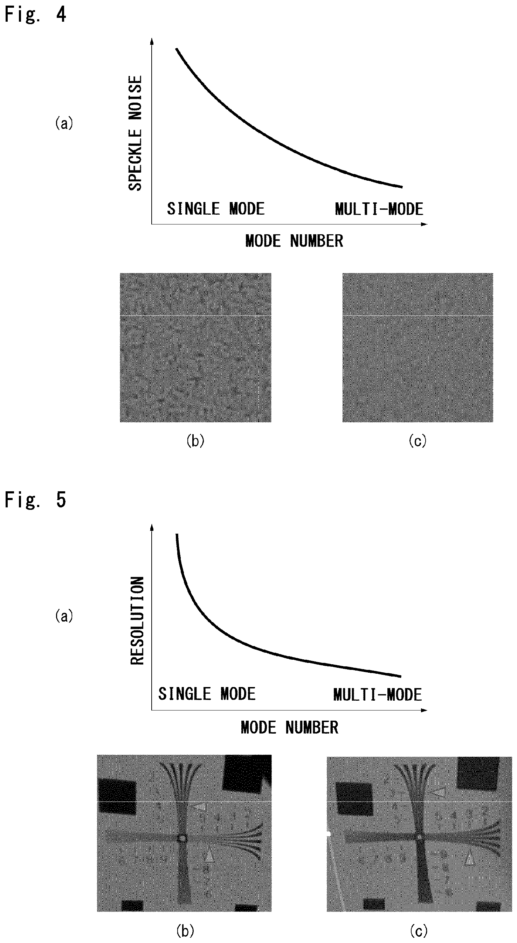

Fig. 4 shows a relationship of speckle noise between a single-mode light output and a multi-mode light output. Fig. 4(a) is a speckle noise relationship graph, and Figs. 4(b) and (c) show images of speckle noise due to single-mode light through a single-mode fiber and multi-mode light through a multi-mode fiber, respectively. Speckle noise, which is also referred to as a multiple beam interference pattern, is a phenomenon specific to coherent light emitted from laser diodes. Considering that lower speckle noise is preferred, multi-mode light is more preferable than single-mode light.

Fig.5 shows a relationship of resolution between a single-mode light output and a multi-mode light output. Fig. 5(a) is a resolution relationship graph, and Figs. 5(b) and (c) show target images due to single-mode light through a single-mode fiber and multi-mode light through a multi-mode fiber, respectively. As indicated by the triangle marks, the vertical resolution and horizontal resolution in Fig. 5(b) are 4.0 and 4.5, respectively, while the vertical resolution and horizontal resolution in Fig. 5(c) are both 3.0. Considering that higher resolution is preferred, single-mode light is more preferable than multi-mode light.

It was found that multi-mode light is preferable from the viewpoint of speckle noise reduction, while single-mode light is preferable from the viewpoint of resolution. Considering that resolution is usually of higher importance for larger-size images, it is of low importance for the optical waveguide device of the present invention, which is for use in small image projection devices and the like. On this account, speckle noise reduction deserves higher priority than resolution, which means that multi-mode light is more preferable than single-mode light in the present invention.

The multi-mode light, as used herein, refers to light that propagates through a plurality of paths in the waveguide . Light propagating through a waveguide of 2 µm in width and height is mostly single-mode light. As the waveguide increases in width and height (i.e., in cross-sectional area), the single-mode light turns into multi-mode light. The cross-sectional area of the waveguide where the single-mode light turns into multi-mode light varies according to the wavelength of the light and is not uniformly defined. Nevertheless, when the waveguide is 5 µm or more in width and height, light with a wavelength in the visible light range is multi-mode light. Since the waveguide that allows multi-mode light to propagate is larger in width and height, there is an improvement in the efficiency of coupling light emitted from the light source into the waveguide.

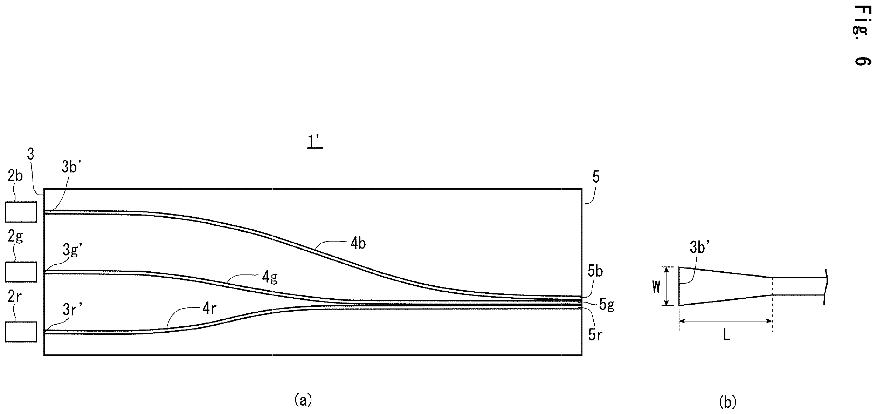

Fig. 6 (a) is a top view of a light source module including an optical waveguide device 1' of Example 2. Example 2 is different from Example 1 in Fig. 1 in that a blue light input port 3b', a green light input port 3g' and a red light input port 3r' on the input port end face 3 have a tapered shape on a horizontal plane. Fig. 6(b) is an enlarged view of the blue light input port 3b' having a tapered shape with a width W and a length L. For example, the width W is 8 µm, while the width of the linear part of the waveguide is 5 µm, and the length L is 1000 µm. Due to the tapered shape, multi-mode light, which can be coupled into the linear waveguide without the tapered shape, cannot be coupled into the waveguide, and the mode distribution of propagating light is shifted to a lower-order mode. As a result, the coupling efficiency decreases; however, the resolution of a displayed image can be improved as compared with the case where the linear waveguide without the tapered shape is used.

The tapered shape can be changed as appropriate, and may be the same or different for the blue light input port 3b' , the green light input port 3g' and the red light input port 3r'. The width W is preferably 6 to 100 µm on the assumption that it is larger than the width of the waveguide. If the width W is less than 6 pm, which is nearly equal to the width of the waveguide, the function and effect to be achieved by the tapered shape may not be obtained. If the width W is more than 100 pm, the optical waveguide device may become larger than necessity. The length L is preferably 50 to 5000 µm. If the length L is less than 50 pm, the taper angle becomes larger, possibly causing an increase in stray light leaking from the waveguide. If the length L is more than 5000 pm, the optical waveguide device may become larger than necessity. Not all the input ports have to be formed in the tapered shape.

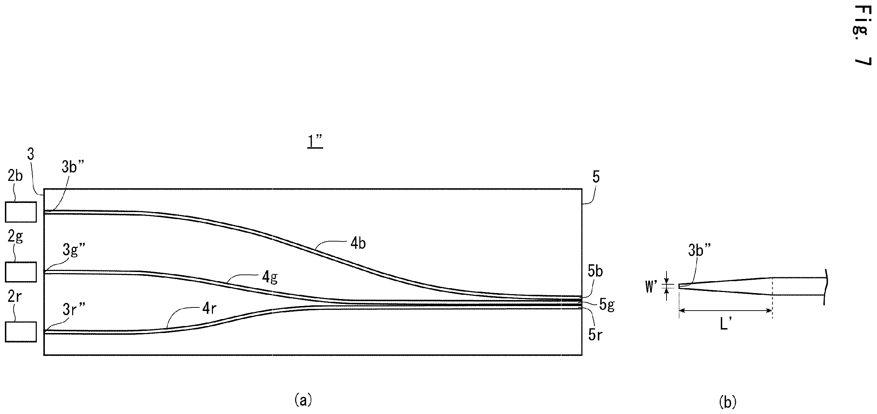

Fig. 7 (a) is a top view of a light source module including an optical waveguide device 1" of Example 3. Example 3 is different from Example 1 in Fig. 1 in that a blue light input port 3b'', a green light input port 3g" and a red light input port 3r" on the input port end face 3 have a reverse tapered shape on a horizontal plane. Fig. 7 (b) is an enlarged view of the blue light input port 3b" having a reverse tapered shape with a width W' and a length L' . For example, the width W' is 1.5 µm so that single-mode light is allowed to propagate through the linear part of the waveguide of 5 µm in width, and the length L' is 1000 µm. Due to the reverse tapered shape, light similar to single-mode light is allowed to propagate through the waveguide, even when it is designed for multi-mode light propagation. As a result, the resolution of a displayed image can be improved as compared with the case where the linear waveguide without the reverse tapered shape is used. However, the optical waveguide device with the reverse tapered shape causes a decrease in both speckle noise reduction effect and coupling efficiency.

The reverse tapered shape can be changed as appropriate, and may be the same or different for the blue light input port 3b'', the green light input port 3g" and the red light input port 3r". The width W' is preferably less than 2 µm on the assumption that it is smaller than the width of the waveguide. If the width W' is 2 µm or more, multi-mode light may be excited depending on the wavelength, and the function and effect to be achieved by the reverse tapered shape may not be obtained. The length L' is preferably 500 µm or more. If the length L' is less than 500 pm, the taper angle becomes larger, possibly causing multi-mode light to be excited, so that light similar to single-mode light may not be able to propagate. The upper limit of the length L' is not particularly limited. The length L' is set as appropriate in light of the fact that a larger length will make the optical waveguide device of the present invention larger. Not all the input ports have to be formed in the reverse tapered shape.

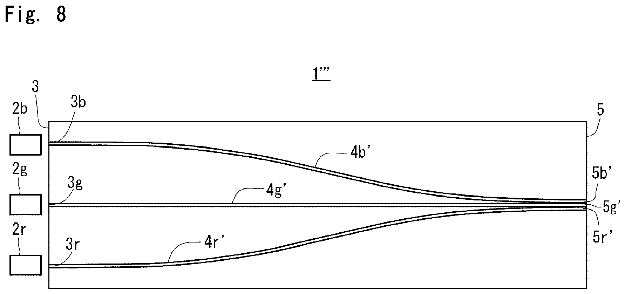

Fig. 8 is a top view of a light source module including an optical waveguide device 1" ' of Example 4. Example 4 is different from Example 1 in Fig. 1 in the shapes of the waveguides and the positions of the output ports. More specifically, a green light optical waveguide 4g' is linear, and a blue light optical waveguide 4b' and a red light optical waveguide 4r' are curved symmetrically with respect to the green light optical waveguide 4g' . Further, a blue light output port 5b', a green light output port 5g' and a red light output port 5r' are located at different positions on the output port end face 5.

The optical waveguide device and the light source module of the present invention can use any known techniques, such as various lenses and MEMS, without particular limitation, when used in products such as image projection devices.

## Claims

1. An optical waveguide device comprising waveguides that respectively receive a plurality of light beams of different wavelengths, the optical waveguide device allowing the respective light beams to be input to and propagate through the corresponding waveguides and then be output, wherein
input ports of the waveguides are spaced apart from each other so as not to receive light beams of improper wavelengths,
at least one of the waveguides is curved, and
output ports of the waveguides are located close to each other.

2. The optical waveguide device according to claim 1, wherein the plurality of light beams propagate through the respective waveguides in a multi-mode fashion.

3. The optical waveguide device according to claim 1 or 2, wherein the waveguides are 5 to 50 µm in width and height.

4. The optical waveguide device according to any one of claims 1 to 3, wherein the input ports of the waveguides are provided at a distance of at least 20 µm or more from each other.

5. The optical waveguide device according to any one of claims 1 to 4, wherein the output ports of the waveguides are provided at a distance of 5 to 10 µm from each other.

6. The optical waveguide device according to any one of claims 1 to 5, wherein the input ports of the waveguides are not present on the same axes in a light propagation direction as the output ports.

7. The optical waveguide device according to any one of claims 1 to 6, wherein the plurality of light beams of different wavelengths include at least a red light beam, a green light beam and a blue light beam.

8. A light source module comprising the optical waveguide device according to any one of claims 1 to 7, and a plurality of light sources arranged on a light input end face side of the optical waveguide device, wherein light beams emitted respectively from the plurality of light sources are guided from the light input end face side and output from a light output end face side of the optical waveguide device.

9. The light source module according to claim 8, wherein each of the light sources is a laser diode.

10. The light source module according to claim 9, wherein the plurality of light sources emit at least a blue light beam, a green light beam and a red light beam.
